# EUROPÄISCHE PATENTSCHRIFT

(11) **EP 0 630 584 B1**
(45) Veröffentlichungstag und Bekanntmachung des Hinweises auf die Patenterteilung: **15.01.1997**
(21) Anmeldenummer: 94109789.1
(22) Anmeldetag: 24.06.1994
(51) Int. Cl.: A23N 7/00, A23L 3/16, A23L 3/10, B65D 88/74

(54) **Vorrichtung zur Behandlung von Produkten in einem geschlossenen Behandlungsraum**
Device for treating products in a closed treatment space
Dispositif pour le traitement de produits dans un espace de traitement fermé

(30) Priorität: 25.06.1993 DE 4321246
(43) Veröffentlichungstag der Anmeldung: 28.12.1994
(73) Patentinhaber: Altmeisch, Guy, L-6760 Grevenmacher (LU)
(72) Erfinder: Altmeisch, Guy, L-6760 Grevenmacher (LU); Hottier, Bernhard, F-57700 Neufchef (FR)
(74) Vertreter: Pellmann, Hans-Bernd, Dipl.-Ing.

(56) Entgegenhaltungen:
- WO-A-92/08375
- DE-A- 2 731 137
- US-A- 4 157 061
- PATENT ABSTRACTS OF JAPAN vol. 12, no. 275 (C-516) 29. Juli 1988 & JP,A,63 056 272 (MIYAHARA KINGO) 10. März 1988

## Beschreibung

Die Erfindung bezieht sich auf eine Vorrichtung zur Behandlung von Produkten in einem geschlossenen Behandlungsraum gemäß dem Oberbegriff des Patentanspruchs 1.

Aus der Druckschrift DE 35 34 726 C2 ist eine Vorrichtung dieser Gattung bekannt, mit welcher Gemüse oder Früchte mit Dampf behandelt werden können. Hierbei handelt es sich im einzelnen um einen Dampfschäler mit einem mit Dampf beaufschlagbaren, stationären Druckbehälter. In dem Druckbehälter ist eine das Behandlungsgut aufnehmende Trommel untergebracht, die im wesentlichen die Form des Druckbehälters aufweist. Obwohl die Trommel gegenüber dem stationären Druckbehälter in diesem verdrehbar gelagert ist, bildet sie mit dem Druckbehälter eine untrennbare Baueinheit, die mit ihrem einen Ende nach oben um eine horizontale Achse kippbar ist. An diesem Ende ist eine Öffnung im Druckbehälter zum Füllen und Entlehren des Behandlungsgutes vorgesehen. Der Deckel dieser Öffnung ist an einem außerhalb des Behälters gelagerten Arm befestigt, der eine Öffnung des Druckbehälters in der Weise bewirkt, daß er zum Trommelinneraum nach Innen verschwenkt wird. Beim Schließvorgang wird die Öffnung durch Herausziehen des Armes von innen verschlossen, wobei der Deckel mittels des inneren Dampfdrucks zusätzlich am Öffnungshals abdichtend angepreßt wird.

Mit dieser konstruktiven Lösung ist das Problem verbunden, daß durch das Verschwenken des Deckels nach innen wertvoller Behälterraum verloren geht. Außerdem muß der Innenraumbereich in der Nähe der Öffnung von den darin befindlichen Produkten frei gehalten werden, um diese nicht zu zerquetschen und ein ungehindertes, volles Öffnen des Behälters zu gewährleisten. Hierbei besteht zusätzlich die Gefahr einer Verschmutzung der Dichtflächen der Öffnung durch einen gelegentlichen Kontakt mit den Produkten beim Einfüllen oder Entleeren, so daß die zuverlässige Abdichtung des Deckels in geschlossenem Zustand beeinträchtigt ist.

Die Einbindung einer solchen Vorrichtung in eine Produktionslinie erfordert entsprechende Transport- bzw. Fördermittel, z.B. Förderbänder, die das zu behandelnde Produkt von einem Silo zum Dampfschäler transportieren, bzw. das behandelte Produkt aus dem Dampfschäler entfernen und eventuell einer weiteren Behandlung zuführen. Bei einer solchen Produktionslinie müssen Behandlungsvorrichtung und Fördermittel meistens auf ein bestimmtes Behandlungsprodukt zugeschnitten werden. Außerdem befindet sich das Behandlungsgut in abwechselndem Kontakt mit den Wänden der Behandlungsvorrichtung und der Fördermittel, so daß je nach Eigenart des Produkts Beschädigungen an dessen Oberfläche und ein bedeutender Verschleiß an den Fördermitteln festzustellen sind. Dieser Umstand ist insbesondere dann nachteilig, wenn es auf das optische Aussehen dampfgeschälter pflanzlicher Produkte ankommt. Das Behandlungsprodukt wird auf dem ganzen Transport- und Behandlungsweg mehrfachen Fallbewegungen ausgesetzt. Hierdurch werden empfindliche Produkte wie z.B. Äpfel und Tomaten, jedoch auch trockene, brüchige Produkte wie z.B. Kakaobohnen mechanisch beschädigt. Eine Behandlung von großvolumigen Produkten wie z.B. Palmbüschel, Kräuter und ähnliches ist kaum möglich.

Beim Produktwechsel, wenn überhaupt möglich, muß die ganze Linie zuerst leergefahren und dann komplett gereinigt werden, um Produktvermischungen zu vermeiden. Eine solche Behandlungsvorrichtung bedingt somit eine zeit- und kostenaufwändige Verarbeitung mit eingeschränkten Elnsatzmöglichkeiten für verschiedene Produkte.

Ein weiteres Problem der bekannten Vorrichtung liegt darin, daß wegen der Beschickungsart von oben und des notwendigen Kippens des Behälters in vertikaler Stellung ein erhöhter Platzbedarf entsteht. Außerdem sind zum Ausführen von Wartungsarbeiten an den Beschickungsvorrichtungen meistens spezielle Podeste oder Gerüste erforderlich.

Aufgabe der Erfindung ist es, eine Vorrichtung mit einem Behandlungsraum zur Behandlung von Produkten sowie einen Produktbehälter zu schaffen, die vielseitige Einsatzmöglichkeiten sowie eine zeit- und aufwandsparende Funktionsweise gewährleisten.

Diese Aufgabe wird durch die Merkmale im kennzeichenden Teil des Patentanspruchs 1 gelöst. Gemäß diesen Merkmalen ist mindestens ein im wesentlichen zylindrisches Mantelelement zwischen zwei Seitenwänden, von diesen getrennt angeordnet, wobei die Endabschnitte des Mantelelements zur Bildung eines geschlossenen Behandlungsraumes mit den Seitenwänden in Anlage bringbar sind. Die Seitenwände können fest oder verschiebbar zueinander angeordnet werden.

Die Seitenwände können auch entweder zueinander parallel und zur Achse des Mantelelements senkrecht oder zueinander und zur Achse des Mantelelements schräg angeordnet werden.

Bei der zweiten Variante der Anordnung bietet sich die Möglichkeit, den Behandlungsraum durch eine Verschiebung des Mantelelements in Richtung der Konvergenz bzw. Divergenz der Seitrenwände zu verkleinern bzw. zu vergrößern.

Ein wesentlicher Vorteil dieser Vorrichtung besteht darin, daß das erfindungsgemäße Abschließen des Behandlungsraumes eine maximale Ausnutzung seines Volumens bei der Unterbringung eines das Behandlungsgut aufnehmenden Produktbehälters gewährleistet. In diesem von der Vorrichtung getrennt ausgebildeten und funktionell selbständigen Produktbehälter können Produkte in einfacher Weise abgefühlt, aufbewahrt, transportiert und anderweitig behandelt werden. Dadurch, daß die Seitenwände oder das Mantelelement ortsfest bleiben können, wird die Möglichkeit gewährleistet, das jeweils unbewegliche Vorrichtungsteil unkompliziert mit entsprechenden Versorgungs- und Entsorgungsleitungen auszustatten.

Die Aufgabe der Erfindung wird desweiteren durch den die Vorrichtung kennzeichnenden Produktbehälter nach dem Patentanspruch 24 gelöst. Demnach hat der Produktbehälter eine zylindrische Wand, an der diametral gegenüberliegend, paarweise Halter befestigt und in einer Linie parallel zur Achse des Produktbehälters voneinander beabstandet angeordnet sind. Ein solcher Produktbehälter ist an der Konstruktion der erfindungsgemäßen Vorrichtung optimal angepaßt und eignet sich besonders zur automatisierten Beschickung, Behandlung und Entnahme aus der Behandlungsvorrichtung, aber auch zum Transport und sonstiger Manipulation außerhalb der Vorrichtung.

Vorteilhafte Weiterbildungen der Erfindung sind in den Unteransprüchen 2 bis 27 definiert.

Die Erfindung wird im folgend anhand von Ausführungsbeispielen unter Bezugnahme auf Zeichnungen näher erläutert.

Es zeigen
Fig. 1 eine Schnittansicht der Vorrichtung in der Beschickungsposition des Mantelements nach einem ersten Ausführungsbeispiel.
Fig. 2 eine andere Schnittansicht der Vorrichtung aus Fig. 1 in der Behandlungsposition des Mantelements.
Fig. 3 eine teilweise Schnittansicht der Vorrichtung in der Beschickungsposition eines der Mantelemente nach einem zweiten Ausführungsbeispiel.
Fig. 4A und Fig. 4B eine vergrößerte teilweise Schnittansicht des Kontaktbereichs zwischen einem Mantelelement und einer Seitenwand der Vorrichtung.
Fig. 5 eine erweiterte, weitere teilweise Schnittansicht der Vorrichtung aus Fig. 3 in der Behandlungsposition eines der Mantelemente.
Fig. 6 eine Schnittansicht der Vorrichtung in einer Behandlungsposition des Mantelements nach einem dritten Ausführungsbeispiel.
Fig. 7 eine Schnittansicht der Vorrichtung nach einem vierten Ausführungsbeispiel.
Fig. 8 und Fig. 9 eine Seiten- und eine Vorderansicht eines Produktbehälters.
Fig. 10 und Fig. 11 vergrößerte teilweise Schnittansichten der Verriegelungseinrichtung und eines Halters des Produktbehälters in Fig. 8 und Fig. 9.

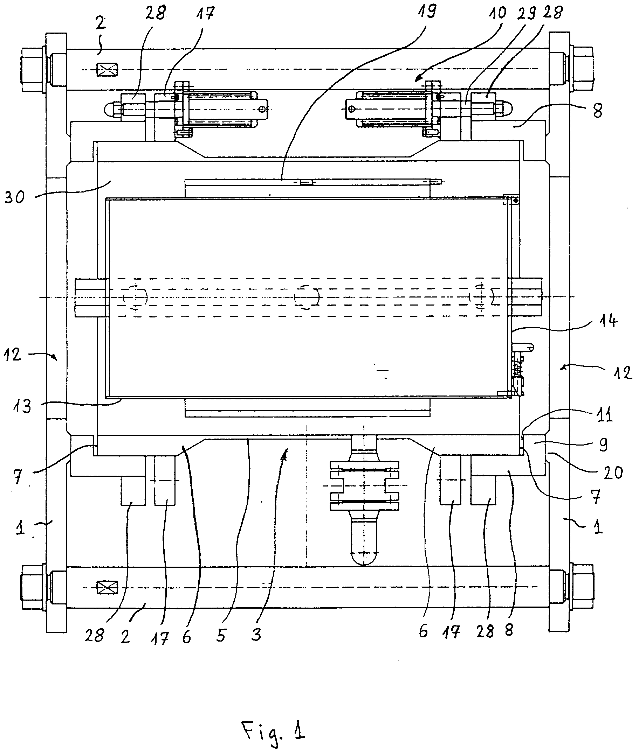

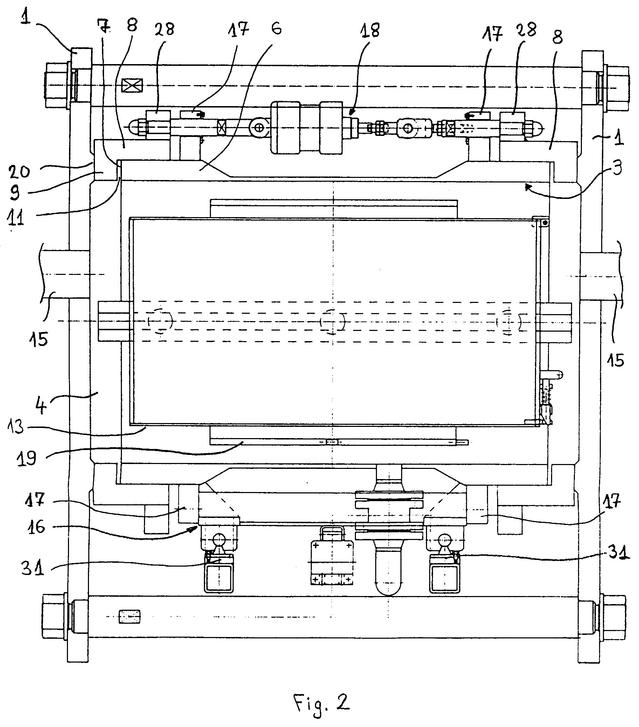

Die Vorrichtung nach Fig. 1 und 2 weist zwei vertikal und ortsfest angeordnete Seitenwände- bzw. platten 1 auf, die randseitig mit Hilfe von waagerechten stabförmigen Streben 2 in einem Abstand parallel zueinander zusammengehalten werden. Die Enden der Streben 2 sind mittels Schraubverbindungen an den Seitenwänden 1 befestigt. Zwischen den Seitenwänden 1 befindet sich ein kresizylindrisches Mantelelement 3, dessen Achse sich senkrecht zu den anliegenden Seitenwänden erstreckt. Das Mantelelement 3 ist von den Seitenwänden unabhängig abgestützt und zwischen diesen horizontal verschiebbar. Das Mantelelement 3 hat einen dünnwandigen mittigen Bereich 5 sowie Endabschnitte mit breiteren Randbereichen 6, die der jeweiligen Seitenplatte 1 gegenüberliegende ringförmigen Stirnflächen 7 aufweisen. Die die offenen Enden des Mantelelements 3 bildenden Endabschnitte haben außerdem Teile 8, die in bezug auf die Randbereiche 6 beweglich und in Richtung zu den Seitenwänden 1 hin axial ausziehbar sind, Mittels der Teile 8 ist das Mantelelement 3 in bestimmten Abschnitten oder Positionen zwischen den Seitenwänden 1 an diesen anlegbar. In der in Fig. 1 gezeigten Position bildet das Mantelelement 3 einen Beschickungsraum 30, währenddessen es in der Position nach Fig. 2 zusammen mit den Seitenwänden 1 einen Behandlungsraum 4 abgrenzt.

Die Teile 8 sind im vorliegenden Ausführungsbeispiel als auf die äußere Umfangsfläche der Randbereiche 6 gleitende ringförmige Spannbacken 8 ausgebildet, mittels deren das Mantelelement 3 an die senkrecht zu seiner Richtungsachse angeordneten Seitenwände 1 zur Bildung eines geschlossenen Behandlungsraumes 4 anlegbar ist. Jede Spannbacke 8 hat einen L-förmigen Querschnitt und besteht aus einem sich im wesentlichen axial erstreckenden zylindrischen Abschnitt und einem radial, nach innen zum Behandlungsraum hin, abgewinkelten Ringabschnitt 9. Der am Randbereich 6 anliegende zylindrische Abschnitt ist an seinem vom Ringabschnitt 9 abgewandten Ende mit sich radial nach außen erstreckenden Lageraugen 28 versehen. Wie aus der in Fig. 1 gezeigten Schnittansicht der Vorrichtung entnehmbar ist, greift in jedem Lagerauge 28 ein Zapfen 29 eines Spannmechanismus 10 ein, welcher an umfangsseitig des Mantelelements 3 vorgesehenen Stützringen 17 befestigt ist. Der Ringabschnitt 9 liegt der Stirnfläche 7 des Mantelelements 3 axial gegenüber und ist gegen eine Dichtfläche der Seitenwand 1 mittels des auf die Spannbacke 8 einwirkenden, am Stützring 17 abgestützten Spannmechanismus 10 vorgespannt. Zumindest in einem Zustand, in dem der Ringabschnitt 9 sich mit der Seitenwand 1 in Anlage befindet, ist zwischen dem Ringabschnitt 9 und der Stirnfläche 7 des Mantelelemnts 3 ein zu dem in der Fig. 2 gezeigten Behandlungsraum 4 hin offener Ringspalt 11 vorhanden.

In der Fig. 1 ist das Mantelelement 3 in einer ersten Position, die als Beschickungsposition bezeichnet wird, gezeigt. In der Beschickungsposition fluchtet das Mantelelement 3 mit zwei gegenüberliegenden Öffnungen 12 in den Seitenwänden 1, so daß ein trommelartig ausgebildeter Produktbehälter 13 durch diese Öffnungen in horitontaler Lage leicht eingeführt werden kann bzw. entnehmbar ist. Der Produktbehälter 13 ist als eine bodenseitig verschließbare kreiszylindrische Siebtrommel ausgebildet, die im Mantelelement 3 auf einer Lagereinrichtung 19 drehbar gelagert ist. Der zylindrische Produktbehälter 13 in Fig. 1 ist einseitig mit einem verschließbaren Deckel 14 versehen, so daß seine Füllung und Entlehrung in einfacher Weise außerhalb der Vorrichtung erfolgen kann. Dadurch erfahren die im Produktbehälter 13 befindlichen Produkte während der aufeinanderfolgenden Behandlungsschritte im wesentlichen nur eine Rollbewegung - z.B. beim Kippen des befüllten Behälters in horizontale Lage, um diesen in das Mantelelement 3 durch eine der Öffnungen 12 einzuführen - ohne auf harte Oberflächen aufzuprallen und dadurch beschädigt zu werden. Weitere Vorteile dieser Konstruktion werden nachfolgend im Rahmen der Darstellung der Funktionsweise der beschriebenen Ausführungsformen der Vorrichtung im einzelnen dargelegt.

Wie aus der Darstellung der in Fig. 2 zu entnehmen ist, befindet sich hier das Mantelelement 3 in einer zweiten Position zwischen den Seitenwänden 1, die im folgenden als Behandlungsposition bezeichnet wird. In der Behandlungsposition sind anstelle der Öffnungen 12 des in Fig. 1 gezeigten Abschnitts der Seitenwände Anschlüsse 15 für mit dem Behandlungsraum 4 verbundene, nicht im einzelnen gezeigte Versorgungs- bzw. Entsorgungsleitungen vorgesehen. Durch die Anschlüsse 15 werden gasförmige oder flüssige Behandlungsmittel, z.B Dampf oder Wasser in den Behandlungsraum 4 eingeleitet bzw. aus dem Behandlungsraum abgelassen. Es kann sowohl mit Druck, als auch mit Vakuum gearbeitet werden. Das Mantelelement 3 ist auf einem horizontal beweglichen Träger bzw. Schlitten 16 abgestützt, mittels dessen es von der Beschickungsposition in die in der Fig. 2 gezeigte Behandlungsposition hin und zurück auf zwei zueinander parallel angeordnete Führungsschienen 31 zwischen den Seitenwänden 1 geschoben werden kann.

Wie die Fig. 2 zeigt, ist der Schlitten 16 mittels der an der Außenfläche des Mantelelements 3 angebrachten Stützringe 17 mit dem letzteren fest verbunden. An den Stützringen 17 ist außer dem obengenannten, in der Fig 1 gezeigten Spannmechanismus 10 auch ein, in der selben Weise wie der Spannmechanismus 10 mit den Spannbacken 8 verbundener Zugmechanismus 18 abgestützt, mit dessen Hilfe die auf beiden Enden des Mantelelements 3 gleitend angeordneten Spannbacken 8 zueinander, entgegen der Vorspannung des Spannmechanismus 10 zusammengezogen und dabei von den Seitenwänden 1 abgehoben werden können.

Die Vorrichtung nach dem ersten Ausführungsbeispiel funktioniert in der Weise, daß das Mantelelement 3 zunächst in seine in Fig. 1 gezeigten Beschickungsposition gebracht und anschließend ein mit dem gewünschten Behandlungsgut außerhalb der Vorrichtung gefüllten Produktbehälter 13 durch eine der Öffnungen 12 in den Innenraum des Mantelelements 3 eingeführt wird. Darauf hin werden die Spannbacken 8 mit Hilfe des Zugmechanismus 18 von den Seitenwänden 1 abgehoben und anschließend das Mantelelement 3 durch eine Bewegung des Schlittens 16 in die in Fig. 2 gezeigte Behandlungsposition geschoben. In dieser Position des Mantelelements 3 wird der Spannmechanismus 10 durch eine Betätigung des Zugmechanismus 18 entlastet, so daß sich die Spannbacken 8 an einstückig mit der Seitenwand 1 ausgebildete Dichtelemente bzw. Dichtringe 20 anlegen und auf diese Weise den Behandlungsraum 4 nach außen abschließen.

In einem nächsten Schritt wird durch die Anschlüsse 15 Dampf in den Behandlungsraum 4 eingelassen und dadurch der darin einwirkende Druck erhöht. Der erhöhte Druck wirkt auch im Ringspalt 11, so daß die abdichtenden Ringabschnitte 9 der Spannbacken 8 an die Dichtringe 20 der Seitenwand 1 zusätzlich angepreßt werden. Durch diese Funktionsweise wird gewährleistet, daß proportional zum ansteigenden Druck im Behandlungsraum 4 und den damit ansteigenden Anforderungen an die Abdichtung, der die Abdichtung fördernde Anpreßdruck auf die Spannbacken 8 selbsttätig ansteigt. Das hat zur Folge, daß die abdichtende Kontaktfläche zwischen den Dichtringen 20 und den Ringabschnitten 9 nicht mehr als für eine zuverlässige Abdichtung erforderlich belastet wird.

Die in den Figuren 1 und 2 gezeigte Vorrichtung kann auch mit mehreren horizontal und parallel zueinander angeordneten Mantelelementen 3 ausgestattet werden. Eine vorteilhafte Anordnung kann zum Beispiel mit zwei Mantelelementen und drei zwischen den Seitenwänden eingerichteten Stationierungspositionen erreicht werden, von denen die mittige Position entsprechend der Darstellung der Fig. 1 mit Beschickungsöffnungen versehen ist und die zwei weiteren benachbarten Positionen als Behandlungspositionen mit einer entsprechenden Ausstattung der anliegenden Seitenwandabschnitte vorgesehen sind. Die Anzahl und Anordnung der zwischen den Seitenwänden 1 eingerichteten Beschickungs- und Behandlungspositionen können nach verschiedenen Gesichtspunkten optimiert werden - z.B in Abhängigkeit von der erforderlichen Produktionskapazität der Vorrichtung, den bestehenden Automatisierungsmöglichkeiten des Anwenders und den bestehenden Produktionslinien, in denen die Vorrichtung einzubauen ist.

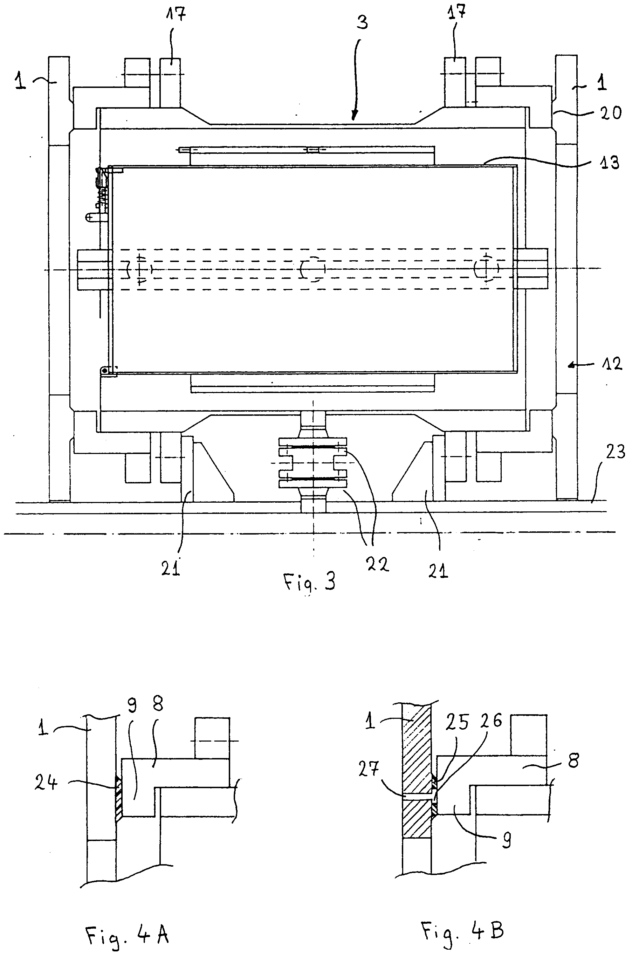

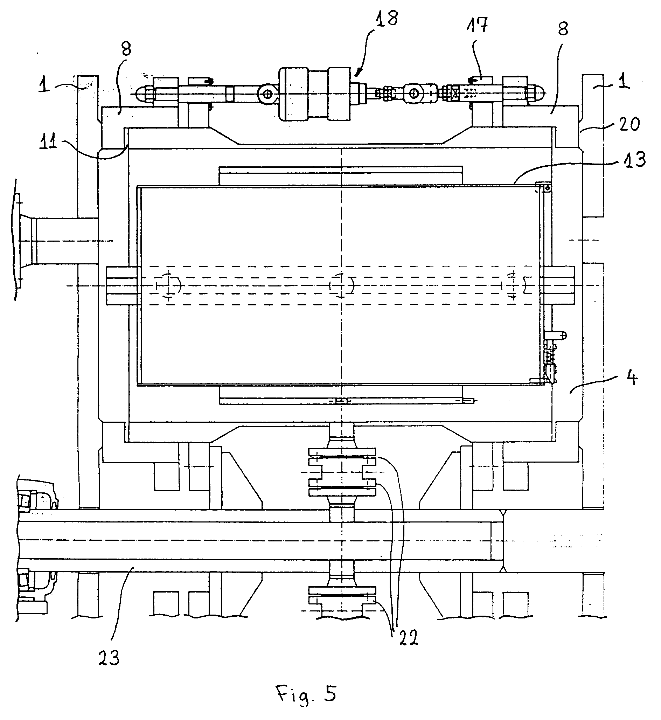

Die Figuren 3 und 5 zeigen ein weiteres Ausführungsbeispiel der Vorrichung, das sich auf eine besonders vorteilhafte Anordnung der Mantelelemente 3 bezieht. Gemäß dieser Ausführung sind die vertikalen Seitenwände 1 im wesentlichen als kreisförmige Platten ausgebildet, so daß die Vorrichtung als ganzes ein trommelähnliches Gebilde darstellt, welches axial von einem in bezug auf die Seitenwände 1 drehbaren Rohrelement 23 durchsetzt wird. Das Rohrelement 23 erstreckt sich horizontal und weist zwei voneinander beabstandete, mit dem Rohrelement fest verbundene, sich radial im Raum zwischen den Seitenwänden 1 erstreckende Stützelemente 21 auf. An diesen Stützelementen 21 sind mehrere Mantelelemente 3 mittels ihrer eigenen Stützringe 17 in der Weise befestigt, daß sie parallel zum Rohrelement 23 und konzentrisch um dieses herum revolverartig angeordnet sind. Das Rohrelement 23, welches die einzelnen, zwischen den Seitenwänden 1 angeordneten Mantelelemente 3 trägt, dient zugleich als gemeinsame Versorgungs- bzw. Entsorgungsleitung für die durch die Mantelelemente 3 in entsprechenden Positionen zwischen den Seitenwänden 1 gebildeten Behandlungsräume 4. Die Innenräume der Mantelemente 4 sind dementsprechend über radial angeordnete Flanschanschlüsse 22 mit dem Inneren des Rohrelements 23 verbunden.

Im Ausführungsbeispiel nach den Figuren 3 und 5 ist das Rohrelement 23 mit den daran befestigten Mantelelementen 3 außerhalb der stationären trommelähnlichen Konstruktion der Seitenwände 1 drehbar gelagert, wie insbesondere der Fig. 5 zu entnehmen ist. Durch eine Drehung des Rohrelements 23 können somit die Positionen der an diesem befestigten Mantelelemente gleichzeitig vertauscht werden. Dabei wechselt jedes einzelne Mantelelement von einer Beschickungsposition in eine Behandlungsposition und umgekehrt, oder von einer Behandlungsposition in die nächste Behandlungsposition zwischen den Seitenwänden 1.

Es können mehrere unterschiedliche Behandlungspositionen zwischen den Seitenwänden 1 geschaffen werden. Zwischen einer Beschickungsposition zum Einfahren und einer zweiten Beschickungsposition zum Ausfahren können z.B. Behandlungspositionen jeweils zum Vorwärmen, Dampfbehandeln und Kühlen eingerichtet werden.

Ein wesentlicher Vorteil der Vorrichtung besteht darin, daß durch die erfindungsgemäße Verschlußkonstruktion des Behandlungsraumes ein größtmöglicher Nutzraum für die Unterbringung von Produktbehältern gewährleistet ist. Dadurch wird eine hohe Behandlungskapazität der Vorrichtung auf engem Raum erreicht, wobei die in den Figuren 3 und 5 gezeigte Ausführungsform eine besonders kompakte und leistungsfähige Anlage darstellt.

Durch die Konstruktion der erfindungsgemäßen Vorrichtung wird außerdem die effektive Verwendung von funktionell selbständigen Produktbehältern ermöglicht. So z.B. kann der Produktbehälter 13 in der in Figuren 1 und 3 gezeigten Position durch die Öffnungen 12 von beiden Seiten der Vorrichtung eingeführt oder entnommen werden.

Die Möglichkeit einer effektiven Verwendung von funktionell selbständigen Produktbehältern gewährleistet den zusätzlichen Vorteil, daß jedes einzelne Produkt in einem bestimmten Behälter für sich transportiert und behandelt werden kann, ohne daß ein Umfüllen von verschiedenen Produkten in ein und demselben Behälter notwendig wird. Dementsprechend können die Wände der einzelnen Behälter produkt- und behandlungsspezifisch gestaltet, z.B. aus Lochblech, Gittermaterial, Filtergewebe oder Stabmaterial wie Rund-, Rohr, Quadrat-, Flach- und Sinderprofilen gefertigt werden. Diese Produktbehälter können dementsprechend außer der Funktion einer Produktaufnahme selbst Behandlungsfunktionen erfüllen wie z.B. Mischen, Sieben, Aufrauen der Produktoberfläche, Reinigen, Bürsten, Entfernen einer oder mehreren Oberflächenschichten des Produkts, Auftragen eines Überzugs auf das Produkt.

Eine Steuerung des Behandlungsprozesses bei einer automatischen Zuführung der Produktbehälter kann dadurch erleichtert werden, daß die Behälter mit einem Erkennungscode versehen werden, mittels dessen z.B. die produktspezifischen Behandlungsparameter in eine Systemprogrammsteuerung der Vorrichtung eingelesen werden können. Somit werden die Möglichkeiten einer automatischen Steuerung des Behandlungsprozesses bedeutend erweitert.

Nach den in Figuren 1, 2, 3 und 5 gezeigten Ausführungsbeispielen ist die Dicht- bzw. Kontaktfläche der Seitenwand 1 durch den als Dichtelement wirkenden Dichtring 20 gebildet, der einen einstückig mit der Seitenwand ausgebildeten flachen Vorsprung darstellt. Eine weitere Ausführungsform des Dichtelements ist in der Fig. 4A gezeigt, wonach das Dichtelement als eine Dichtscheibe 24 aus einem nichtmetallischen Werkstoff, z.B. Gummi oder Polytetrafluorethylen (Teflon) augebildet ist. Nach einer weiteren, in Fig. 4B gezeigten Ausführungsform ist eine Dichtscheibe 25 mit einem gegenüber vom Ringabschnitt 9 der Spannbacke 8 ausgebildeten Kanal 26 versehen. In diesen Kanal 26 kann z.B. Luft oder eine Reinigungsflüssigkeit zur Entfernung von Verschmutzungen auf der Kontaktoberfläche der Dichtscheibe 25 durch einen Durchtritt 27 in der Seitenwand 1 eingeblasen werden. Der Durchtritt 27 ist vorzugsweise durch mehrere, entlang des Kanals in einem bestimmten Abstand voneinander befindlichen Bohrungen in der Seitenwand 1 gebildet.

Die Reinigung der Dichtfläche zwischen dem Ringabschnitt 9 der jeweiligen Spannbacke 8 und der Dichtscheibe 25 der anliegenden Seitenwand 1 erfolgt vorzugsweise in einem Zustand, in dem der Ringabschnitt 9 an der Seitenwand 1 anliegt. In diesem Zustand wird durch eine nicht im einzelnen beschriebene Einrichtung ein geeignetes Medium - z.B. Druckluft oder Dampf - in die Bohrungen des Durchtritts 27 eingeleitet, so daß dieses Medium in den Kanal 26 einströmt und diesen ausfüllt. Die Spannbacken 8 können über den Zugmechanismus 18 gezielt etwas zurück und wieder gegen die Dichtfläche ausgefahren werden, so daß das Medium pulsierend mit hoher Geschwindigkeit entlang der Dichtfläche ausströmt und dabei an der Dichtfläche haftende Verunreinigungen entfernt.

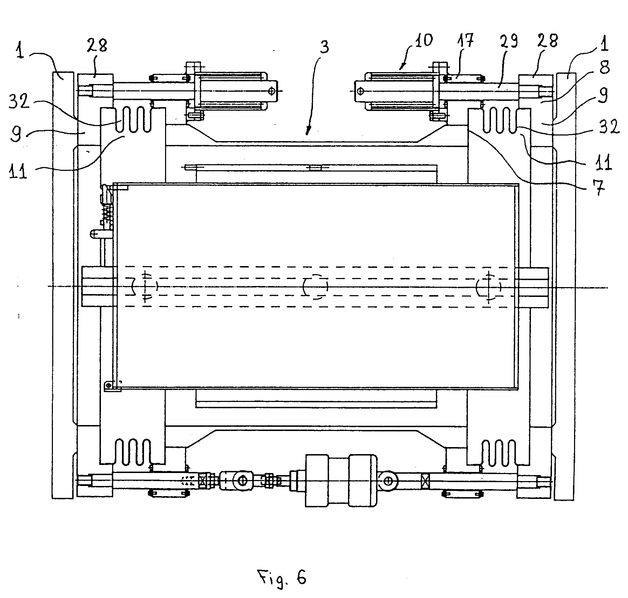

Gemäß einem dritten, in Fig. 6 gezeigten Ausführungsbeispiel der Erfindung bestehen die Spannbacken 8 im wesentlichen nur aus dem abgewinkelten Ringabschnitt 9, in dessen äußerem Bereich die Lageraugen 28 ausgebildet sind, und sind in einem Abstand vom Mantelelement 3, diesem stirnseitig gegenüber angeordnet. Die den Spannmechanismus 10 tragenden Stützringe 17 bilden eine sich radial erstreckende Fortsetzung der Stirnfläche 7 des Mantelelements 3, die über Kompensatoren 32 mit der jeweils gegenüberliegenden Spannbacke 8 verbunden ist. Die Spannbacken 8 werden dabei im wesentlichen von den Zapfen 29 des Spannmechanismus 10 getragen, wobei die Kompensatoren im Ringspalt 11 liegen. Durch diese Konstruktion wird die radiale Breite des Ringabschnitts 9 erhöht, so daß eine höhere Anpreßkraft und eine größere Dichtfläche gewährleistet sind. Weil die beweglichen Verbindungen zwischen dem Mantelelement 3 und den Spannbacken 8 durch die zumindest axial dehnbaren Kompensatoren 32 gasdicht sind, können höchste Anforderungen in bezug auf Dichtheit, Sicherheit und Ausschluß der Umgebungsatmosphäre während der Behandlung erfüllt werden. Außerdem gewährleistet diese Konstruktion ein leichtes Kippen der Spannbacken 8 in bezug auf das Mantelelement 3, so daß eine allseitige, abdichtende Anlage zwischen den Seitenwänden und den Spannbacken trotz leichter Abweichungen der Seitenwände 1 von der Parallelität erreichbar ist.

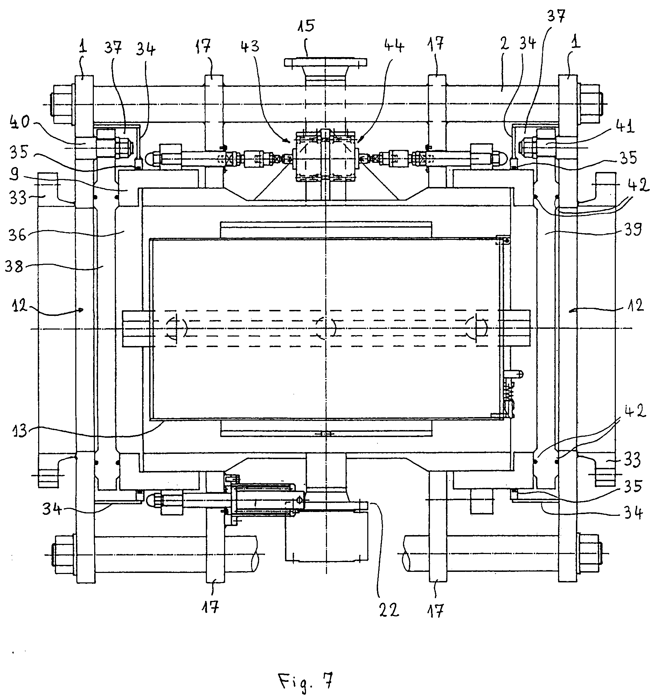

Bei einem in der Fig 7 gezeigten, vierten Ausführungsbeispiel der Erfindung ist das Mantelelement 3 zu den anliegenden Seitenwänden 1 fest positioniert. Zu diesem Zweck reichen die Stützringe 17 nach außen weiter bis zu den Streben 2 und sind zumindest mit einer davon verschweißt oder mittels Schrauben mit dieser lösbar verbunden. An den Öffnungen 12 der Seitenwände 1 sind Flansche 33 angebracht, über die die Behandlungsvorrichtung in eine aseptisch arbeitende Anlage integriert werden kann. Die dem Mantelelement 3 gegenüberliegenden Bereiche der Seitenwände 1 sind jeweils mit einer Kapselung 34 versehen, die die Spannbacken 8 von außen umgibt und einen Inneraum 36 durch Dichtungen 35 in jeder Lage der Spannbacken 8 nach außen hin abschließt. In der Nähe der Öffnungen 12 der Seitenwände 1 wird somit durch die jeweilige Kapselung 34 eine Kammer 37 als Bestandteil des Inneraumes 36 gebildet, in der jeweils eine Platte 38, 39 zum Verschließen der Öffnungen untergebracht ist. Die Platten 38, 39 sind an fest mit den Seitenwänden 1 verbundenen Stiften 40, 41 verschwenkbar und in axialer Richtung um einen geringen Maß beweglich gelagert sowie mit Dichtungen 42 versehen. Die Spannbacken 8 sind durch separate Zugmechanismen 43, 44 betätigbar.

Die Behandlung in einer derartigen Vorrichtung erfolgt in der Weise, daß bei zusammengezogener rechten Spannbacke 8 zunächst die in der Fig. 7 rechte Platte 39 in eine Position verschwenkt wird, in der sie die anliegende Öffnung 12 versperrt. Daraufhin wird der rechte Zugmechanismus 44 betätigt, so daß die Spannbacke 8 die Platte 39 gegen die rechte Seitenwand 1 drückt und über die Dichtungen 42 nach außen und zur rechten Kammer 37 hin abdichtet. Nach Einführen des Produktbehälters 13 in das Mantelelement 3 durch die linke Öffnung 12 wird derselbe Vorgang auch in bezug auf die linke Seite der Vorrichtung durchgeführt, anschließend der geschlossene Innen- oder Behandlungsraum 36 entlüftet und eine Dampfbehandlung bzw. Sterilisation durchgeführt. Während dieses Vorgangs werden die rechte Kammer 37 sowie die an den rechten Flansch 33 angeschlossene weitere Vorrichtung keimfrei gehalten. Nach Abschluß der Behandlung geht der Druck im Behandlungsraum 36 zurück, so daß die rechte Spannbacke 8 problemlos zurückgezogen, die Platte 39 weggeschwenkt und die rechte Öffnung 12 freigemacht werden kann. Nach automatischem Ausfahren des Produktbehälters 13 wird die rechte Öffnung wieder, wie oben im einzelnen beschrieben, verschlossen und abgedichtet und erst dann die linke Öffnung freigemacht, um einen neuen Beschickungs- und Behandlungszyklus anfangen zu können.

Ein wesentlicher Vorteil dieser Ausführungsform besteht darin, daß das Mantelelement 3 verschiedene Behandlungs- und Beschickungspositionen zwischen den Seitenwänden 1 nicht wechseln muß, um einen kompletten Behandlungszyklus zu ermöglichen.

Eine vorteilhafte Ausführung besteht darin, eine Druckmesseinrichtung in die Kammer 37 der Kapselung 34 einzubauen, um zu erkennen, wann die Dichtungen 35 und 42 nicht mehr einwandfrei funktionieren. Neben den Anschlüssen 15 und 22 können mehrere Ab- und Zuführungen für die einzelnen Behandlungsmedien am Mantelelement 3 vorgesehen werden. Auch die Verschlußplatten 38 und 39 können andersartig verschoben oder sogar durch separate Schieber oder andere Absperrorgane ersetzt werden. Die Dichtungen 42 können auch an den Seitenwänden 1 - wie im ersten Ausführungsbeispiel - oder am Ringabschnitt 9 der Spannbacke 8 angebracht werden.

Bei der Konstruktion nach Fig. 7 ist die Verwendung des im dritten Ausführungsbeispiel beschriebenen Kompensators 32 besonders vorteilhaft, wobei selbst die Kapselung 34 zwischen den Seitenwänden 1 und den Spannbacken 8 zu einer sicheren Abdichtung derart ausgeführt werden kann. Auch andere Kombinationen dieser Konstruktion mit den vorangehenden Ausführungsbeispielen sind ganz oder teilweise möglich.

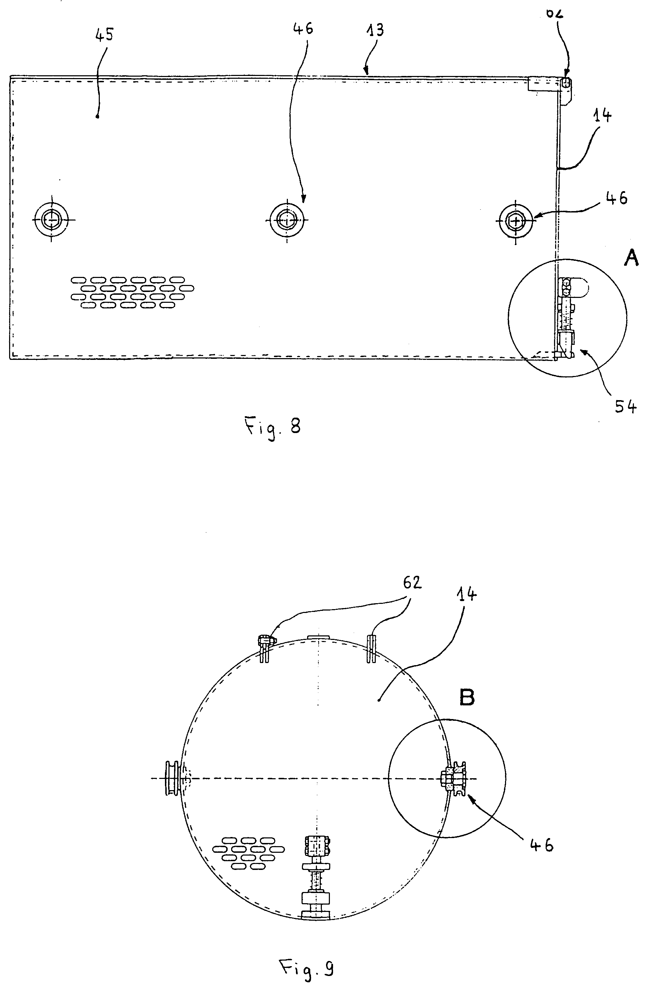

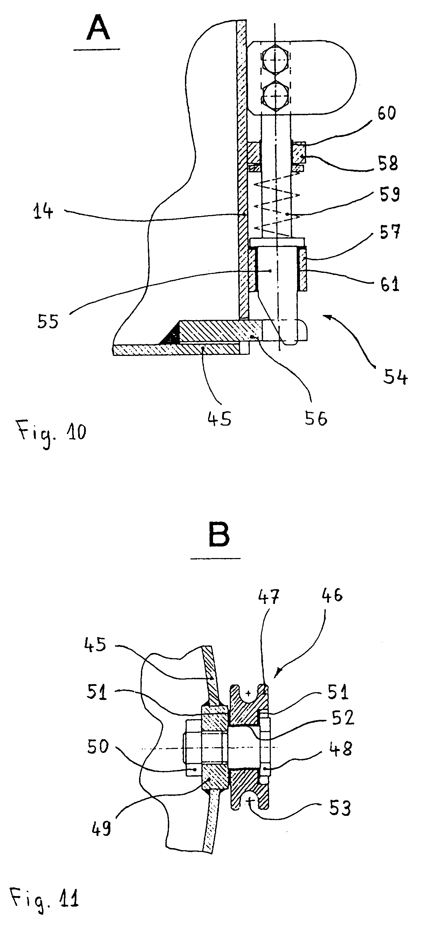

Die Figuren 8 bis 11 zeigen im einzelnen die Konstruktion eines von der Vorrichtung trennbaren, selbständigen Produktbehälters 13, der in allen Ausführungsbeispielen der Erfindung entsprechende Anwendung finden kann. Der Produktbehälter 13 hat eine zylindrische Wand 45, die aus perforiertem Stahlblech besteht und an diametral entgegengesetzten Seiten drei Paar von Haltern 46 aufweist. Die Halter 46 einer jeden Seite der Wand 45 befinden sich auf einer Linie, wobei zwei Halter jeweils an den Enden des durch die Wand 45 gebildeten Zylinders und der dritte Halter mittig, in gleichem Abstand von den zwei Haltern angeordnet sind. Der in Fig. 11 im einzelnen gezeigte Halter 46 hat eine Rolle 47, die mittels eines Bolzens 48 in einem verstärkten Wandabschnitt 49 der Wand 45 befestigt ist. Der Bolzen 48 hat einen kopfseitig verbreiterten Schaftabschnitt und einen engeren, mit einem Gewinde versehenen Endabschnitt, der in den Wandabschnitt 49 bis zum Anschlag des Schaftabschnitts eingeschraubt und durch eine im Inneren des Produktbehälters 13 befindliche Flachmutter 50 gesichert ist. Die Rolle 47 ist im Bereich des kopfseitigen Schaftabschnitts über ein Gleitlager 52 darauf frei drehbar gelagert und seitlich durch Scheiben 51 jeweils vom Bolzenkopf und vom Wandabschnitt 49 getrennt. Die Rolle 47 hat eine umfangsseitige Vertiefung 53, die ein leichteres Greifen des Produktbehälters 13 zum Zwecke seiner Manipulation ermöglicht.

Der Deckel des Produktbehälters 13 ist mittels zwei Scharnierverbindungen 62 an der Wand 45 angebracht und hat eine diametral gegenüber angeordnete Verriegelungseinrichtung 54, die in Fig. 10 im einzelnen gezeigt ist. Die Verriegelungseinrichtung 54 hat eine entlang der Deckeloberfläche verschiebbare Klinke 55, die mit einem verstärkten Endabschnitt 56 der zylindrischen Wand 45 in Eingriff bringbar ist. Die Klinke 55 ist in zwei an der Deckeloberfläche in einem Abstand voneinander befestigten, mit Gleitlager 60, 61 versehenen Führungslaschen 57, 58 geführt und mittels einer zwischen den Führungslaschen angeordneten Feder 59 in Richtung ihrer Verriegelungsposition vorgespannt.

Als vorteilhafte Weiterbildungen der beschriebenen Ausführungsformen der erfindungsgemäßen Vorrichtung bieten sich verschiedene Maßnahmen an. So z.B. können zur Fixierung der Seitenwände in vorteilhafter Weise auch andere Elemente als die erwähnten Streben verwendet werden, wobei es darauf ankommt, eine unveränderliche Position der Seitenwände zueinander - z.B. eine Parallelität zwischen diesen - zu gewährleisten. In bestimmten Anwendungsfällen könnte vom Vorteil sein, die Mantelelemente 3 nicht kreiszylindrisch, sondern mit einem rechteckigen Querschnitt auszubilden. Beim Spannmechanismus 10 bietet sich das in der Fig. 1 schematisch gezeigte Federmechanismus, währenddessen die Funktion des Zugmechanismus 18 durch einen Spannschloß in besonders vorteilhafter Weise erfüllt werden kann. Steuerungsmäßig ist beim Zugmechanismus auch die Verwendung eines hydraulischen oder pneumatischen Spannzylinders besonders vorteilhaft.

Die beschriebenen Vorrichtungen können in vorteilhafter Weise nicht nur zur Behandlung von Lebensmitteln, insbesondere Gemüse oder Früchten eingesetzt werden, sondern auch zur Behandlung von anderen Naturprodukten oder Erzeugnissen, die im Schüttzustand und sogar in büschelartiger Form vorliegen.

Die erfindungsgemäße Vorrichtung kann z.B. mit Erfolg für folgende Behandlungen verwendet werden: Sterilisation von Naturprodukten, auch in geschlossenen Behältnissen, Garen und Kochen von Fleisch, Behandlung von Kraben und anderen Schalentieren, um den Schälprozeß zu erleichtern, Begasung von Dateln oder anderen Produkten, um anhaftende, schädliche Insekten zu vernichten, Sterilisation von medizinischen Geräten.

Eine Vorrichtung zur Behandlung von Produkten, insbesondere von Früchten und Gemüse in einem geschlossenen Behandlungsraum hat mindestens ein im wesentlichen zylindrisches Mantelelement, das zwischen zwei Seitenwänden verschiebbar oder fest angeordnet ist. Die Endabschnitte des Mantelelements haben axial ausziehbare Teile bzw. Spannbacken, mittels deren die Endabschnitte zur Bildung des geschlossenen Behandlungsraumes mit den Seitenwänden in Anlage bringbar sind.

## Patentansprüche

1. Vorrichtung zur Behandlung von Produkten in einem geschlossenen Behandlungsraum, **gekennzeichnet durch** mindestens ein im wesentlichen zylindrisches Mantelelement mit beweglichen Endabschnitten (3), das zwischen zwei Seitenwänden (1), von diesen getrennt angeordnet ist, wobei die Endabschnitte des Mantelelements (3) zur Bildung eines geschlossenen Behandlungsraumes (4; 36) mit den Seitenwänden (1) in Anlage bringbar sind.

2. Vorrichtung nach Anspruch 1, **dadurch gekennzeichnet**, daß mindestens ein Mantelelement (3) zwischen den Seitenwänden (1) verschiebbar angeordnet ist.

3. Vorrichtung nach Anspruch 1, **dadurch gekennzeichnet**, daß mindestens ein Mantelelement (3) zwischen den Seitenwänden (1) fest angeordnet ist.

4. Vorrichtung nach einem der Ansprüche 1 bis 3, **dadurch gekennzeichnet**, daß die Seitenwände (1) zueinander parallel und zur Achse des Mantelelements (3) senkrecht angeordnet sind.

5. Vorrichtung nach einem der Ansprüche 1 bis 3, **dadurch gekennzeichnet**, daß die Seitenwände (1) zueinander und zur Achse des Mantelelements (3) schräg angeordnet sind.

6. Vorrichtung nach einem der Ansprüche 1 bis 5, **gekennzeichnet durch** mehrere mit Ihren Achsen parallel zueinander angeordnete Mantelelemente (3) zur Bildung mehrerer voneinander getrennten Behandlungsräume (4; 36) zwischen den Seitenwänden (1).

7. Vorrichtung nach Anspruch 6, **dadurch gekennzeichnet**, daß die Mantelelemente (3) an einem gemeinsamen Rohrelement (23) revolverartig zwischen den Seitenwänden (1) angeordnet sind.

8. Vorrichtung nach einem der Ansprüche 1 bis 7, **dadurch gekennzeichnet**, daß die Endabschnitte des oder eines jeden Mantelelements (3) axial ausziehbare Teile (8) aufweisen, mittels deren die Endabschnitte zur Bildung des geschlossenen Behandlungsraumes (4; 36) mit den Seitenwänden (1) in Anlage bringbar sind.

9. Vorrichtung nach Anspruch 8, **dadurch gekennzeichnet**, daß die ausziehbaren Teile Spannbacken (8) sind, wobei jede Spannbacke (8) einen einer Stirnfläche (7) des Mantelelements (3) axial gegenüberliegenden Abschnitt (9) aufweist, welcher zumindest in einem an der Seitenwand (1) angelegten Zustand von der gegenüberliegenden Stirnfläche (7) durch einen zum Behandlungsraum (4; 36) hin offenen Ringspalt (11) getrennt ist, so daS die Spannbacke (8) durch einen im Behandlungsraum (4; 36) wirkenden Druck an die Seitenwand (1) anpreßbar ist.

10. Vorrichtung nach Anspruch 9, **dadurch gekennzeichnet**, daß mindestens eine Spannbacke (8) mittels eines Kompensators (32) mit dem Mantelelement (3) verbunden ist.

11. Vorrichtung nach einem der Ansprüche 1 bis 10, **dadurch gekennzeichnet**, daß im Mantelelement (3) ein darin aufgenommener Produktbehälter (13) gelagert ist.

12. Vorrichtung nach Anspruch 11, **dadurch gekennzeichnet**, daß der Produktbehälter (13) eine bodenseitig verschließbare kreiszylindrische Siebtrommel ist.

13. Vorrichtung nach einem der Ansprüche 1 bis 12, **dadurch gekennzeichnet**, daß mindestens eine Seitenwand (1) eine Öffnung (12) zum horizontalen Einführen bzw. zur horizontalen Entnahme des Produktbehälters (13) aufweist.

14. Vorrichtung nach Anspruch 13, **gekennzeichnet durch** eine parallel zu der jeweiligen Seitenwand (1) verschwenkbare Platte (38; 39), die in einer die Öffnung (12) verschließenden Position zwischen der Seitenwand (1) und der gegenüberliegenden Spannbacke (8) abdichtend anpreßbar ist.

15. Vorrichtung nach Anspruch 14, **dadurch gekennzeichnet**, daß die Platte (38; 39) beidseitig mit Dichtungen (42) versehen ist.

16. Vorrichtung nach einem der Ansprüchen 10 bis 15, **dadurch gekennzeichnet**, daß zwischen den Spannbacken (8) und den Seitenwänden (1) jeweils eine Kapselung (34) angeordnet ist, durch die eine Verbindung des Behandlungsraumes (36) nach außen auch dann verhindert ist, wenn die Spannbacken (8) von der jeweiligen Seitenwand (1) abgehoben sind.

17. Vorrichtung nach Anspruch 16, **dadurch gekennzeichnet**, daß die Kapselung (34) ein mit der jeweiligen Spannbacke (8) und der gegenüberliegenden Seitenwand (1) verbundener Kompensator ist.

18. Vorrichtung nach Anspruch 16, **dadurch gekennzeichnet**, daß die Kapselung (34) mit der jeweiligen Seitenwand (1) einseitig verbunden ist und über eine Gleitdichtung (35) mit der anliegenden Spannbacke (8) in Berührung ist, so daß die Spannbacke (8) entlang der Dichtung (35) zum Verschließen des Behandlungsraumes (36) verschiebbar ist.

19. Vorrichtung nach einem der Ansprüche 1 bis 18, **dadurch gekennzeichnet**, daß jede Seitenwand (1) ein dem zylindrischen Mantelelement (3) gegenüberliegendes Dichtelement (20; 24; 25) aufweist.

20. Vorrichtung nach Anspruch 19, **dadurch gekennzeichnet**, daß das Dichtelement ein einstückig mit der Seitenwand ausgebildeter Dichtring (20) ist.

21. Vorrichtung nach Anspruch 19, **dadurch gekennzeichnet**, daß das Dichtelement eine Dichtscheibe (24; 25), insbesondere eine Dichtscheibe aus einem nichtmetallischen Werkstoff ist.

22. Vorrichtung nach Anspruch 21, **dadurch gekennzeichnet**, daß die Dichtscheibe (25) einen mittig angeordneten Kanal (26) aufweist, in welchen Kanal ein gasförmiges oder oder flüssiges Mittel durch einen in der anliegenden Seitenwand (1) vorgesehenen Durchtritt (27) unter Druck einführbar ist.

23. Vorrichtung nach Anspruch 22, **dadurch gekennzeichnet**, daß der Durchtritt (27) aus mehreren entlang der Dichtscheibe (25) angeordneten Bohrungen gebildet ist und das dadurch geleitete Mittel Druckluft ist.

24. Vorrichtung nach einem der Ansprüche 1 bis 23 gekennzeichnet durch einen Produktbehälter mit einer zylindrischen Wand (45), an der diametral gegenüberliegend, paarweise Halter (46) befestigt und in einer Linie parallel zur Achse des Produktbehälters (13) voneinander beabstandet angeordnet sind.

25. Vorrichtung nach Anspruch 24, **dadurch gekennzeichnet**, daß ein Paar Halter (46) mittig am Produktbehälter (13) angeordnet ist.

26. Vorrichtung nach einem der Ansprüche 24 oder 25, **dadurch gekennzeichnet**, daß zumindest ein Paar Halter (46) frei drehbare Rollen (47) aufweisen, deren Drehachse senkrecht zur Achse des Produktbehälters (13) ist.

27. Vorrichtung nach Anspruch 26, **dadurch gekennzeichnet**, daß die Rollen (47) eine umfangsseitige Vertiefung (53) haben.

## Claims

1. Apparatus for treating products in a closed treatment space, characterized by at least one essentially cylindrical jacket element (3) with movable end sections, which is arranged between two side walls (1) in a manner separated from the latter, the end sections of the jacket element (3) being capable of being brought into contact with the side walls (1) to form a closed treatment space (4; 36).

2. Apparatus according to Claim 1, characterized in that at least one jacket element (3) is arranged displaceably between the side walls (1).

3. Apparatus according to Claim 1, characterized in that at least one jacket element (3) is arranged in a fixed manner between the side walls (1).

4. Apparatus according to one of Claims 1 to 3, characterized in that the side walls (1) are arranged parallel to one another and perpendicular to the axis of the jacket element (3).

5. Apparatus according to one of Claims 1 to 3, characterized in that the side walls (1) are arranged obliquely to one another and to the axis of the jacket element (3).

6. Apparatus according to one of Claims 1 to 5, characterized by a plurality of jacket elements (3) arranged with their axes parallel to one another to form a plurality of mutually separate treatment spaces (4; 36) between the side walls (1).

7. Apparatus according to Claim 6, characterized in that the jacket elements (3) are arranged in a revolver-like manner between the side walls (1) on a common tube element (23).

8. Apparatus according to one of Claims 1 to 7, characterized in that the end sections of the jacket element (3) or of each jacket element (3) have axially extendable parts (8) by means of which the end sections can be brought into contact with the side walls (1) to form the closed treatment space (4; 36).

9. Apparatus according to Claim 8, characterized in that the extendable parts are clamping jaws (8), each clamping jaw (8) having a section (9) which lies axially opposite an end face (7) of the jacket element (3) and which is separated, at least after having been brought into contact with the side wall (1), from the opposite end face (7) by an annular gap (11) which is open towards the treatment space (4; 36), with the result that the clamping jaw (8) can be pressed against the side wall (1) by a pressure acting in the treatment space (4; 36).

10. Apparatus according to Claim 9, characterized in that at least one clamping jaw (8) is connected to the jacket element (3) by means of a compensator (32).

11. Apparatus according to one of Claims 1 to 10, characterized in that a product container (13) accommodated in the jacket element (3) is mounted in the jacket element (3).

12. Apparatus according to Claim 11, characterized in that the product container (13) is a circular-cylindrical screening drum which can be closed at the end.

13. Apparatus according to one of Claims 1 to 12, characterized in that at least one side wall (1) has an opening (12) for the horizontal introduction or horizontal removal of the product container (13).

14. Apparatus according to Claim 13, characterized by a plate (38; 39) which can be pivoted parallel to the respective side wall (1) and, in a position in which it closes the opening (12), can be pressed into sealing contact between the side wall (1) and the opposite clamping jaw (8).

15. Apparatus according to Claim 14, characterized in that the plate (38; 39) is provided with seals (42) on both sides.

16. Apparatus according to one of Claims 10 to 15, characterized in that an encapsulation (34) is in each case arranged between the clamping jaws (8) and the side walls (1) and, by means of this encapsulation, a connection between the treatment space (36) and the outside is prevented even when the clamping jaws (8) have been raised from the respective side wall (1).

17. Apparatus according to Claim 16, characterized in that the encapsulation (34) is a compensator connected to the respective clamping jaw (8) and the opposite side wall (1).

18. Apparatus according to Claim 16, characterized in that the encapsulation (34) is connected to the respective side wall (1) on one side and is in contact by way of a sliding seal (35) with the in-contact clamping jaw (8), thus allowing the clamping jaw (8) to be displaced along the seal (35) to close the treatment space (36).

19. Apparatus according to one of Claims 1 to 18, characterized in that each side wall (1) has a sealing element (20; 24; 25) opposite the cylindrical jacket element (3).

20. Apparatus according to Claim 19, characterized in that the sealing element is a sealing ring (20) of one-piece design with the side wall.

21. Apparatus according to Claim 19, characterized in that the sealing element is a sealing washer (24; 25), in particular a sealing washer made of a nonmetallic material.

22. Apparatus according to Claim 21, characterized in that the sealing washer (25) has a centrally arranged opening (26), into which opening a gaseous or liquid medium can be introduced under pressure through a passage (27) provided in the in-contact side wall (1).

23. Apparatus according to Claim 22, characterized in that the passage (27) is formed by a plurality of holes arranged along the sealing washer (25) and the medium passed through them is compressed air.

24. Apparatus according to one of Claims 1 to 23, characterized by a product container with a cylindrical wall (45) to which holders (46) are attached diametrically opposite one another in pairs and arranged spaced apart in a line parallel to the axis of the product container (13).

25. Apparatus according to Claim 24, characterized in that a pair of holders (46) is arranged centrally on the product container (13).

26. Apparatus according to one of Claims 24 or 25, characterized in that at least one pair of holders (46) has freely rotatable rollers (47), the axis of rotation of which is perpendicular to the axis of the product container (13).

27. Apparatus according to Claim 26, characterized in that the rollers (47) have a depression (53) on their circumference.

## Revendications

1. Dispositif pour le traitement de produits dans un espace de traitement fermé, caractérisé par au moins un élément enveloppe (3) essentiellement cylindrique, équipé de sections d'extrémité mobiles, disposé entre deux parois latérales (1), en étant séparé de celles-ci, les sections d'extrémité de l'élément enveloppe (3) pouvant être placées en appui avec les parois latérales (1) pour constituer un espace de traitement (4; 36) fermé.

2. Dispositif selon la revendication 1, caractérisé en ce qu'au moins un élément enveloppe (3) est disposé déplaçable entre les parois latérales (1).

3. Dispositif selon la revendication 1, caractérisé en ce que au moins un élément enveloppe (3) est disposé rigidement entre les parois latérales (1).

4. Dispositif selon l'une des revendications 1 à 3, caractérisé en ce que les parois latérales (1) sont disposées paralèlement l'une à l'autre et perpendiculairement par rapport à l'axe de l'élément enveloppe (3).

5. Dispositif selon l'une des revendications 1 à 3, caractérisé en ce que les parois latérales (1) sont disposées obliquement les unes par rapport aux autres et par rapport à l'axe de l'élément enveloppe (3).

6. Dispositif selon l'une des revendications 1 à 5, caractérisé par une pluralité d'éléments enveloppe (3) disposés avec leurs axes parallèles entre eux pour constituer une pluralité d'espaces de traitement (4; 36) séparés les uns des autres, entre les parois latérales (1).

7. Dispositif selon la revendication 6, caractérisé en ce que les éléments enveloppe (3) sont disposés en revolver entre les parois latérales (1), sur un élément tubulaire (23) commun.

8. Dispositif selon l'une des revendications 1 à 7, caractérisé en ce que les sections d'extrémité du ou de chaque élément enveloppe (3) présentent des parties (8) extractibles axialement, au moyen desquelles des sections d'extrémité peuvent être placées en appui avec les parois latérales (1) pour constituer l'espace de traitement (4; 36) fermé.

9. Dispositif selon la revendication 8, caractérisé en ce que les parties extractibles sont des mâchoires de serrage (8), chaque mâchoire de serrage présentant une section (9) axialement opposée à une surface frontale (7) de l'élément enveloppe (3) et qui est séparée, au moins à l'état appliqué sur la paroi latérale (1), vis à vis de la face frontale (7) opposée, la séparation étant obtenue par un interstice annulaire (11) ouvert vis-à-vis de l'espace de traitement (4; 36), si bien que la mâchoire de serrage (8) est prenable sur la paroi latérale (1) au moyen d'une pression agissant dans l'espace de traitement (4; 36).

10. Dispositif selon la revendication 9, caractérisé en ce qu'au moins une mâchoire de serrage (8) est reliée à l'élément enveloppe (3) au moyen d'un compensateur (32).

11. Dispositif selon l'une des revendications 1 à 10, caractérisé en ce qu'un récipient à produits (13), est placé à l'intérieur de l'élément enveloppe (3) et logé dans celui-ci.

12. Dispositif selon la revendication 11, caractérisé en ce que le récipient à produits (13) est un tambour de tamisage cylindrique circulaire pouvant être obturé côté fond.

13. Dispositif selon l'une des revendications 1 à 12, caractérisé en ce qu'au moins une paroi latérale (1) présente une ouverture (12) pour assurer l'introduction horizontale ou le prélèvement horizontal du récipient à produits (13).

14. Dispositif selon la revendication 13, caractérisé par une plaque (38; 39), pouvant pivoter par rapport à la paroi latérale (1) respective et pouvant être pressée avec étanchéité dans une position obturant l'ouverture (12), entre la paroi latérale (1) et la mâchoire de serrage (8) opposée.

15. Dispositif selon la revendication 14, caractérisé en ce que la plaque (38; 39) est pourvu des deux côtés de joints d'étanchéité (42).

16. Dispositif selon l'une des revendications 10 à 15, caractérisé en ce qu'entre les mâchoires de serrage (8) et les parois latérales (1) est respectivement prévu un encapsulage (34), au moyen duquel toute liaison entre l'espace de traitement (36) et l'extérieur est alors empêchée, lorsque les mâchoires de serrage (8) dégagées de la paroi latérale (1) respective.

17. Dispositif selon la revendication 16, caractérisé en ce que l'encapsulage (34) est un compensateur relié à la mâchoire de serrage (8) respective et à la paroi latérale (1) opposée.

18. Dispositif selon la revendication 16, caractérisé en ce que l'encapsulage (34) est relié d'un côté à la paroi latérale (1) respective et est en contact, par l'intermédiaire d'un joint d'étanchéité à glissement (35), avec la mâchoire de serrage (8) en appui, si bien que la mâchoire de serrage (8) est déplaçable le long du joint d'étanchéité (35), pour obturer l'espace de traitement (36).

19. Dispositif selon l'une des revendications 1 à 18, caractérisé en ce que chaque paroi latérale (1) présente un élément d'étanchéité (20; 24; 25) opposé à l'élément enveloppe (3) cylindrique.

20. Dispositif selon la revendication 19, caractérisé en ce que l'élément d'étanchéité est une bague d'étanchéité (20) réalisée d'une seule pièce avec la paroi latérale.

21. Dispositif selon la revendication 19, caractérisé en ce que l'élément d'étanchéité est un disque d'étanchéité (24; 25), en particulier un disque d'étanchéité constitué d'un matériau non métallique.

22. Dispositif selon la revendication 21, caractérisé en ce que le disque d'étanchéité (25) présente un canal (26) disposé centralement, canal dans lequel un milieu gazeux ou liquide peut être introduit sous pression par un passage (27) prévu dans la paroi latérale (1) en appui.

23. Dispositif selon la revendication 22, caractérisé en ce que le passage (27) est constitué de plusieurs perçages disposés le long du disque d'étanchéité (25) et le moyen passé à travers ce passage est de l'air comprimé.

24. Dispositif selon l'une des revendications 1 à 23, caractérisé par un récipient à pression, ayant une paroi cylindrique (45) sur laquelle sont fixées une paire de supports (45) placés diamétralement à l'opposé et espacés les uns des autres en une ligne parallèle à l'axe du récipient à produits (13).

25. Dispositif selon la revendication 24, caractérisé en ce qu'une paire de supports (46) est disposée centralement sur le récipient à produits (13).

26. Dispositif selon l'une des revendications 24 ou 25, caractérisé en ce qu'au moins une paire de supports (46) présente des rouleaux (47) pouvant tourner librement, dont l'axe de rotation est perpendiculaire à l'axe du récipient à produits (13).

27. Dispositif selon la revendication 26, caractérisé en ce que les rouleaux (47) ont un creusement (53) situé du côté périphérie.
